# EUROPEAN PATENT APPLICATION

(11) **EP 4 637 253 A1**
(43) Date of publication of application: **22.10.2025**
(21) Application number: 24791911.1
(22) Date of filing: 11.04.2024
(51) Int. Cl.: H04W 74/0808

(54) **DATA TRANSMISSION METHOD, COMMUNICATION NODE, AND STORAGE MEDIUM**

(30) Priority: 19.04.2023 CN 202310441236
(71) Applicant: ZTE Corporation, Shenzhen, Guangdong 518057 (CN)
(72) Inventor: XING, Weimin, Shenzhen, Guangdong 518057 (CN); LU, Youxiong, Shenzhen, Guangdong 518057 (CN); HU, Yuzhou, Shenzhen, Guangdong 518057 (CN); HE, Haigang, Shenzhen, Guangdong 518057 (CN)
(74) Representative: Aipex B.V.
(86) International application number: PCT/CN2024/087210
(87) International publication number: WO 2024/217326

(57) **Abstract**

Provided are a data transmission method, a communication node, and a storage medium. The data transmission method includes: determining the type of at least one sharing identifier information field according to related information; and sending data containing COT sharing information, where the sharing information contains the at least one sharing identifier information field, and the at least one sharing identifier information field is used for indicating one or more second nodes sharing a COT.

## Description

### TECHNICAL FIELD

The present application relates to the field of wireless communication technology, for example, a data transmission method, a communication node, and a storage medium.

### BACKGROUND

With the evolution of sidelink (SL) communication, the demand for SL transmission in conventional unlicensed bands is increasingly growing. Before SL transmission is initiated in unlicensed bands, a channel access procedure (commonly known as a listen-before-talk (LBT) procedure) is required to be performed according to relevant frequency band usage specifications. If a channel resource is detected to be idle within a detection duration during the LBT procedure (that is, the LBT succeeds), a user equipment (UE) may proceed with the transmission; otherwise, the UE forgoes the transmission. If the LBT succeeds, the UE may further initiate a channel occupancy time (COT) (or called channel occupancy (CO)). Within the COT, the UE can not only perform transmission but also share the COT with other UEs (or called responding UEs (RUEs)). However, due to the complex communication modes among multiple UEs and various constraints in the transmission process such as format restrictions and overhead limitations, the sharing procedure exhibits relatively high complexity. Currently, no effective solutions have been proposed to achieve reliable COT sharing and control between UEs.

### SUMMARY

The present application provides a data transmission method, a communication node, and a storage medium.

An embodiment of the present application provides a data transmission method. The data transmission method is applied to a first node and includes the following.

The type of at least one sharing identifier information field is determined according to related information; and data containing COT sharing information is sent, where the sharing information contains the at least one sharing identifier information field, and the at least one sharing identifier information field is used for indicating one or more second nodes sharing a COT.

An embodiment of the present application further provides a data transmission method. The data transmission method is applied to a second node and includes the following.

Data containing COT sharing information is received, where at least one sharing identifier information field is provided in the sharing information, and the at least one sharing identifier information field is used for indicating one or more second nodes sharing a COT; and the type of the at least one sharing identifier information field is determined.

An embodiment of the present application further provides a communication node. The communication node includes a memory, a processor, and a computer program stored in the memory and executable by the processor, where the processor performs the preceding data transmission method when executing the program.

An embodiment of the present application further provides a computer-readable storage medium. The computer-readable storage medium is configured to store a computer program which, when executed by a processor, causes the processor to perform the preceding data transmission method.

### BRIEF DESCRIPTION OF DRAWINGS

FIG. 1 is a flowchart of a data transmission method according to an embodiment;
FIG. 2 is a flowchart of a data transmission method according to an embodiment;
FIG. 3 is a schematic diagram of a sharing identifier according to an embodiment;
FIG. 4 is a schematic diagram of another sharing identifier according to an embodiment;
FIG. 5 is a schematic diagram of another sharing identifier according to an embodiment;
FIG. 6 is a schematic diagram of another sharing identifier according to an embodiment;
FIG. 7 is a structural diagram of a data transmission apparatus according to an embodiment;
FIG. 8 is a structural diagram of another data transmission apparatus according to an embodiment; and
FIG. 9 is a structural diagram of the hardware of a communication node according to an embodiment.

### DETAILED DESCRIPTION

The present application is described hereinafter in conjunction with the drawings and embodiments. The embodiments described herein are intended to explain the present application. For ease of description, only parts related to the present application are illustrated in the drawings.

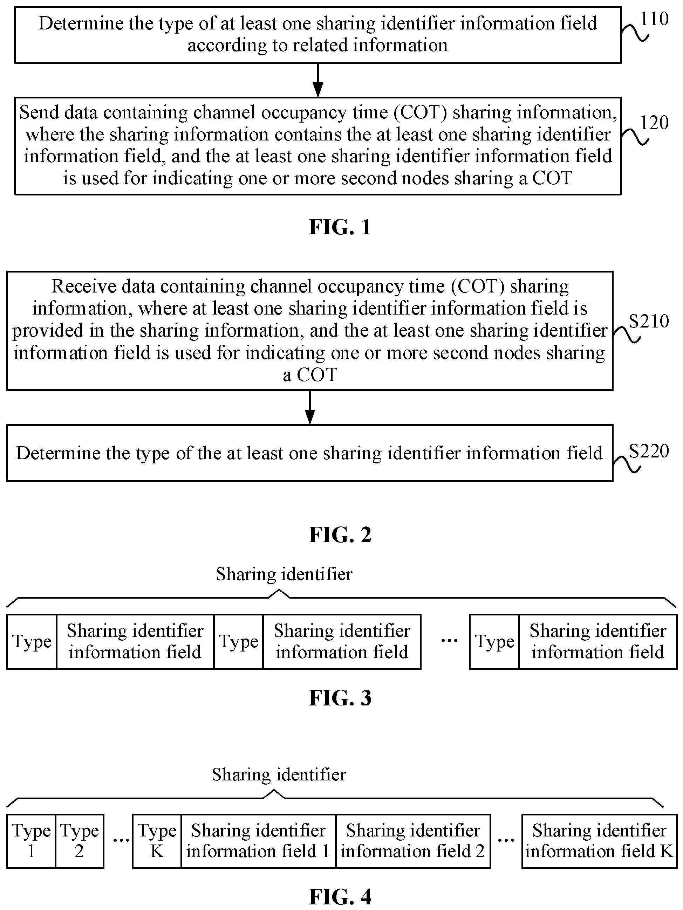

FIG. 1 is a flowchart of a data transmission method according to an embodiment. The method is applied to a first node. The first node is a UE initiating a COT (or called an initiating UE (IUE)). As shown in FIG. 1, the method provided in this embodiment includes S110 and S120.

In S110, the type of at least one sharing identifier information field is determined according to related information.

In S120, data containing COT sharing information is sent, where the sharing information contains the at least one sharing identifier information field, and the at least one sharing identifier information field is used for indicating one or more second nodes sharing a COT.

In this embodiment, the first node can not only send data within the COT but also share the COT with the second node. The second node may be understood as a UE receiving the sharing information, and if the second node meets a certain condition, the second node may share the COT with the first node and become a responding UE (RUE). The related information may be information for configuring or indicating the type of a sharing identifier information field. The type of the sharing identifier information field is related to the type of the transmission between the first node and the second node. Sending data, which may also be understood as a transmission, a message, a channel or a signal, refers to a carrier carrying the sharing information.

In this embodiment, the data sent by the first node to the second node contains sharing information to achieve COT sharing, and the process of sending the sharing information supports a variety of cast types such as unicast, groupcast and broadcast. The IUE can identify which UEs may become RUEs, and the IUE can restrict what the RUEs send. Moreover, the sending format of sharing information, associated overhead, and the complexity of reception of sharing information at the second node are taken into consideration, COT sharing is effectively and reliably controlled on the above basis.

In an embodiment, the type of the sharing identifier information field includes at least one of: a unicast identifier type, a groupcast identifier type or a broadcast identifier type.

In an embodiment, the related information includes sharing configuration information and/or sharing indication information.

The sharing configuration information may be acquired from a serving node (such as a base station), may be provided by other UEs or servers, may be pre-configuration information input in a UE during manufacturing, may be information predefined by a protocol, or may be provided by a higher layer of a current UE for a lower layer. The source of the sharing configuration information is not limited here. The sharing indication information may be carried in control information (for example, sidelink control information (SCI)) corresponding to a channel or a signal used for transmission, may be input by a user using the current UE, or may be provided by a higher layer of the current UE for a lower layer. Generally, the sharing configuration information may be static or semi-static, that is, the sharing configuration information is basically unchanged or does not need to be changed for a long time; the sharing indication information may be dynamic, that is, the sharing indication information can dynamically indicate changes.

In an embodiment, the related information includes sharing indication information; each sharing identifier information field corresponds to a type field in the sharing indication information or the at least one sharing identifier information field corresponds to a type field in the sharing indication information.

In an embodiment, if the sharing identifier information field is of a unicast identifier type, the corresponding sharing identifier information field at least includes a source identifier; if the sharing identifier information field is of a groupcast identifier type or a broadcast identifier type, the corresponding sharing identifier information field at least includes a destination identifier.

For unicast, with a unicast connection Link A between the UE1 and the UE2 as an example, a pair of identifiers corresponding to the unicast connection is {ID_{1,A}, ID_{2,A}}, where ID_{1,A} is an identifier corresponding to the UE1, and ID_{2,A} is an identifier corresponding to the UE2. When the UE1 is going to share one COT with the UE2, {Source ID = ID_{1,A}, Destination ID = ID_{2,A}} may be carried in the sharing information to notify the UE2 of shared resources, where the Source ID is a source identifier, and the Destination ID is a destination identifier. Further, since the Destination ID is an identifier of the UE2, the Destination ID may be omitted, and only Source ID = ID_{1,A} is carried in the sharing information. After the UE2 receives the sharing information, if the Source ID in the received sharing information corresponds to the pair of identifiers {Source ID = ID_{2,A}, Destination ID = ID_{1,A}} of the Link A stored in the UE2, the UE2 may be considered to be shared the COT with. For unicast, from the perspective of the IUE, the sharing information is used for indicating that the identifier of the peer RUE may be {Source ID, Destination ID} corresponding to the unicast connection or a Source ID corresponding to the unicast connection, that is, the sharing information includes at least the Source ID in the above description. In an embodiment, for unicast, from the perspective of the IUE, the sharing information is used for indicating that the identifier of the peer RUE may be {Source ID, Destination ID} corresponding to the unicast connection or a Destination ID corresponding to the unicast connection, that is, the sharing information includes at least the Destination ID.

For groupcast or broadcast, the UE can identify whether the UE itself is a target receiving UE according to the Destination ID in groupcast or broadcast, that is, for groupcast or broadcast, from the perspective of the IUE, the sharing information is used for indicating that the identifier of the peer RUE may only include the Destination ID. In an embodiment, the Destination IDs corresponding to groupcast and broadcast may be the same, and to avoid misunderstanding by the receiving UE, it is necessary to distinguish the two Destination IDs; if the Destination IDs corresponding to groupcast and broadcast cannot be the same, the two Destination IDs may not need to be distinguished. After the IUE initiates a COT, one or more of unicast, groupcast or broadcast sharing may be initiated.

In an embodiment, sharing identifier information fields of each type correspond to a number field in sharing indication information, where the number field is used for indicating the number of the sharing identifier information fields of each type; or the at least one sharing identifier information field corresponds to a number field in sharing indication information, where the number field is used for indicating the number of the at least one sharing identifier information field.

In an embodiment, the related information includes sharing configuration information; each sharing identifier information field corresponds to one piece of sharing configuration information for configuring the type of the each sharing identifier information field; or the at least one sharing identifier information field corresponds to one piece of sharing configuration information for configuring the type of the at least one sharing identifier information field.

In an embodiment, the related information includes sharing configuration information; the sharing configuration information is used for configuring the number of sharing identifier information fields of each type or the sharing configuration information is used for configuring the number of the at least one sharing identifier information field.

In an embodiment, the related information includes sharing configuration information, and the sharing configuration information is used for configuring configuration information for determining whether to allow the at least one sharing identifier information field to be sent.

In an embodiment, the data further contains a transmission identifier, and the transmission identifier includes a source identifier and a destination identifier.

In an embodiment, the type of the at least one sharing identifier information field is determined according to the cast type of the data and the transmission identifier.

In an embodiment, the related information and the at least one sharing identifier information field are carried in at least one of the following information elements:
sidelink control information (SCI), a media access control-control element (MAC CE) or a media access control (MAC) header.

FIG. 2 is a flowchart of a data transmission method according to an embodiment. The method is applied to a second node. As shown in FIG. 2, the method provided in this embodiment includes S210 and S220.

In S210, data containing COT sharing information is received, where at least one sharing identifier information field is provided in the sharing information, and the at least one sharing identifier information field is used for indicating one or more second nodes sharing a COT.

In S220, the type of the at least one sharing identifier information field is determined.

In this embodiment, a first node can not only send data within the COT but also share the COT with the second node. The second node may be understood as a UE receiving the sharing information, and if the second node meets a certain condition, the second node may share the COT with the first node and become a responding UE (RUE). Sending data, which may also be understood as a transmission, a message, a channel or a signal, refers to a carrier carrying the sharing information.

In an embodiment, whether the second node is a responding node is determined according to the type. The second node is a responding node if the second node meets at least one of the following conditions.

A sharing identifier information field is determined to be of a unicast identifier type, and the destination identifier of a unicast connection of the second node corresponds to the source identifier indicated in the sharing identifier information field; a sharing identifier information field is determined to be of a unicast identifier type, the destination identifier of a unicast connection of the second node corresponds to the source identifier indicated in the sharing identifier information field, and the source identifier of the unicast connection of the second node corresponds to the destination identifier indicated in the sharing identifier information field; a sharing identifier information field is determined to be of a groupcast identifier type, and a groupcast destination identifier of the second node corresponds to the groupcast destination identifier indicated in the sharing identifier information field; or a sharing identifier information field is determined to be of a broadcast identifier type, and a broadcast destination identifier of the second node corresponds to the broadcast destination identifier indicated in the sharing identifier information field.

In an embodiment, the second node further meets at least one of the following conditions.

The priority of data sent by the second node is higher than or equal to the priority of data of a node initiating the COT; the priority of data sent by the second node is higher than or equal to the priority indicated by the node initiating the COT; the received power detected by the second node and corresponding to the sharing information is greater than or equal to a set threshold value; or the duration of data sent by the second node does not exceed the remaining COT duration.

The priority may be a channel access priority class (CAPC) or a pro-se priority per packet (PPPP).

In an embodiment, the second node further meets at least one of the following conditions.

A sharing identifier information field is determined to be of a groupcast identifier type or a broadcast identifier type, and a groupcast destination identifier or a broadcast destination identifier of the second node corresponds to the groupcast destination identifier or the broadcast destination identifier indicated in the sharing identifier information field; or a sharing identifier information field is determined to be of a groupcast identifier type N, and a destination identifier of a groupcast type 1 of the second node corresponds to the identifier of a groupcast type N indicated in the sharing identifier information field, where N is a positive integer.

In an embodiment, whether the second node is a responding node is determined according to the cast type of the data and the transmission identifier. The second node is a responding node if the second node meets at least one of the following conditions.

The cast type of the data is unicast, and the destination identifier of a unicast connection of the second node corresponds to the source identifier in the transmission identifier of the transmission; the cast type of the data is unicast, the destination identifier of a unicast connection of the second node corresponds to the source identifier in the transmission identifier of the transmission, and the source identifier of the unicast connection of the second node corresponds to the destination identifier in the transmission identifier; the cast type of the data is groupcast, and a groupcast destination identifier of the second node corresponds to the groupcast destination identifier in the transmission identifier of the transmission; the cast type of the data is broadcast, and a broadcast destination identifier of the second node corresponds to the broadcast destination identifier in the transmission identifier of the transmission; the cast type of the data is groupcast or broadcast, and a groupcast destination identifier or a broadcast destination identifier of the second node corresponds to the groupcast destination identifier or the broadcast destination identifier in the transmission identifier of the transmission; or the cast type of the data is a groupcast type N, and a destination identifier of the groupcast type N of the second node corresponds to the groupcast destination identifier in the transmission identifier of the transmission, where N is a positive integer.

The data transmission method is exemplarily described hereinafter through the following embodiments.

### Embodiment one

The UE1 (that is, the first node) successfully acquires a COT and shares the COT with another UE (that is, the second node). The UE1 sends one transmission within the COT, such as a physical sidelink control information (PSCCH)/physical sidelink shared channel (PSSCH) transmission. The transmission may also be called data transmission. The sharing identifier contained in the sharing information in the transmission is used for identifying one or more UEs that may be shared with the current COT.

FIG. 3 is a schematic diagram of a sharing identifier according to an embodiment. As shown in FIG. 3, the sharing identifier includes at least one sharing identifier information field. Each sharing identifier information field corresponds to one piece of sharing indication information indicating the type of the sharing identifier information field, that is, a type field. The type field indicates whether the corresponding sharing identifier information field is of a unicast identifier type, a groupcast identifier type or a broadcast identifier type. In this case, it may be understood that there are three types of sharing identifier information fields (which may be simply called identifier types). In an instance, if groupcast and broadcast do not need to be distinguished, the type field indicates whether the corresponding sharing identifier information field is of a unicast identifier type or of a groupcast/broadcast identifier type. In this case, it may be understood that there are two types of sharing identifier information fields. In another instance, if not only groupcast and broadcast need to be distinguished but also groupcast types (with two groupcast types as an example) need to be distinguished, the type field indicates whether the corresponding sharing identifier information field is of a unicast identifier type, a broadcast identifier type, a groupcast type 1 or a groupcast type 2. In this case, it may be understood that there are four identifier types, and since the types of identifier types are the same as the types of cast types, the identifier type may also be called the cast type. In summary, the type of the sharing identifier information field may be one of the following: a unicast identifier type, a broadcast identifier type, a groupcast identifier type, a broadcast/groupcast identifier type, a groupcast identifier type 1, a groupcast identifier type 2, ..., or a groupcast identifier type N (where N is a positive integer). The following will be described with three identifier types as an example. In addition, the present application is not limited to the naming of the above-described types. For example, the unicast identifier type may also be called a type at least including a source identifier (Source ID), and the groupcast or broadcast identifier type may be called a type at least including a destination identifier (Destination ID). As long as the implementation process remains consistent, all such variations shall fall within the scope of the present application.

In an instance, when the type field indicates a unicast identifier type, the corresponding sharing identifier information field at least includes a source identifier. The source identifier here is a source identifier associated with a unicast connection. For example, the source identifier is generally an identifier of the UE1. In an instance, the corresponding sharing identifier information field further includes a destination identifier. The destination identifier here is a destination identifier associated with a unicast connection. For example, when the unicast connection is the connection between the UE1 and the UE2, the destination identifier is an identifier of the UE2.

In an instance, when the type field indicates a groupcast identifier type or a broadcast identifier type, the corresponding sharing identifier information field at least includes a destination identifier. The destination identifier here is a groupcast identifier or groupcast destination identifier associated with one groupcast or a broadcast destination identifier associated with one broadcast. In an instance, the corresponding sharing identifier information field further includes a source identifier, for example, the source identifier here is an identifier of the UE1, and generally, such a source identifier provides no valid information, so to reduce the overhead, the corresponding sharing identifier information field may not carry the source identifier.

FIG. 4 is a schematic diagram of another sharing identifier according to an embodiment. The arrangement of the fields in the sharing identifier is not limited. For example, the type field may be immediately next to its corresponding sharing identifier information field or may be located before (as shown in FIG. 3) or after the corresponding sharing identifier information field, or the type field and the corresponding sharing identifier information field may not be adjacent to each other. As shown in FIG. 4, K type fields and K sharing identifier information fields are in a locational one-to-one correspondence, but the type field and the corresponding sharing identifier information field are adjacent to each other.

If a sharing identifier information field contains a Source ID and a Destination ID, the Source ID and the Destination ID are not required to be adjacent to each other. For example, all Source IDs are arranged together, and all Destination IDs are arranged together so that the Source ID and the Destination ID contained in a sharing identifier information field are not adjacent to each other. In summary, the illustrations in the embodiments of the present application only indicate information fields logically, and physically, the locations occupied by these information fields are not limited to these illustrations.

In addition, the number of bits occupied by different identifiers may be the same or different. For example, the Source ID and the Destination ID may occupy different numbers of bits, which may cause the length of the sharing identifier information field to be different. For example, when the sharing identifier information field is of the unicast identifier type, the length of the sharing identifier information field may be 8 bits (only the Source ID contained) or 24 bits (both the Source ID and the Destination ID contained); when the sharing identifier information field is of the groupcast identifier type, the length of the sharing identifier information field is 16 bits (only the Destination ID contained). In an instance, when the sharing identifier information fields have different lengths, the overhead can be reduced, but the complexity at the receiving UE may be increased. Therefore, the lengths of all sharing identifier information fields may be set according to the maximum possible length of the sharing identifier information field. For example, the lengths of all sharing identifier information fields each may be set to 24 bits.

In an instance, the Source ID and the Destination ID may be a lower-layer ID and a higher-layer ID, respectively. Generally, the higher-layer ID (for example, a Layer 2 ID) is longer, and its length is, for example, 24 bits; the lower-layer ID (for example, a physical layer (Layer 1) ID) is generally a truncation of the higher-layer ID, and its length is, for example, 8 bits or 16 bits, which is not limited here. In an instance, for broadcast or groupcast, in addition to the Destination ID, the sharing identifier information field may also carry the Source ID by using the remaining bits, or the remaining bits may be padded as reserved bits; the sharing identifier information field may carry a higher-layer Destination ID. For example, if the lengths of all the sharing identifier information fields are 24 bits, the sharing identifier information field carries a 16-bit lower-layer Destination ID and an 8-bit lower-layer Source ID or carries a 24-bit higher-layer Source ID when the sharing identifier information field is of a unicast identifier type, and the sharing identifier information field carries a 24-bit higher-layer Destination ID when the sharing identifier information field is of a broadcast identifier type or a groupcast identifier type.

In addition to the sharing indication information, in an instance, the related information further includes sharing configuration information. The sharing configuration information is suitable for all instances of the present application and includes at least one of the following: whether to allow a sharing identifier or a sharing identifier information field to be sent (for example, to reduce the overhead, transmissions within one SL resource pool may be configured to neither carry sharing identifiers nor provide related sharing configuration information, that is, to disable the carrying of sharing identifiers), or whether allow specific types of sharing identifier information fields (that is, to independently enable and disable an individual type of sharing identifier information fields). In a specific instance, all types of sharing identifier information fields are disabled or no configuration enabling any type is provided, which is functionally equivalent to disabling the carrying of sharing identifiers. In another special instance, only one allowable identifier type is configured. For example, only the unicast identifier type is allowed while other types are prohibited, and in this case, the type field may be omitted when the sharing identifier is to be indicated since there is only one identifier type available.

The sharing information includes the number of sharing identifier information fields or the number of bits occupied by the sharing identifier information field. In an instance, setting the number to zero or not configuring the number may be considered functionally equivalent to disabling the carrying of sharing identifiers as described above. In an instance, if the sharing information is carried in SCI, the number needs to be reasonably configured to prevent the length of the sharing information from exceeding the length that the capacity of the SCI allows. This embodiment is also applicable in all embodiments of the present application, and subsequent references to type-related content will not be repeated.

### Embodiment two

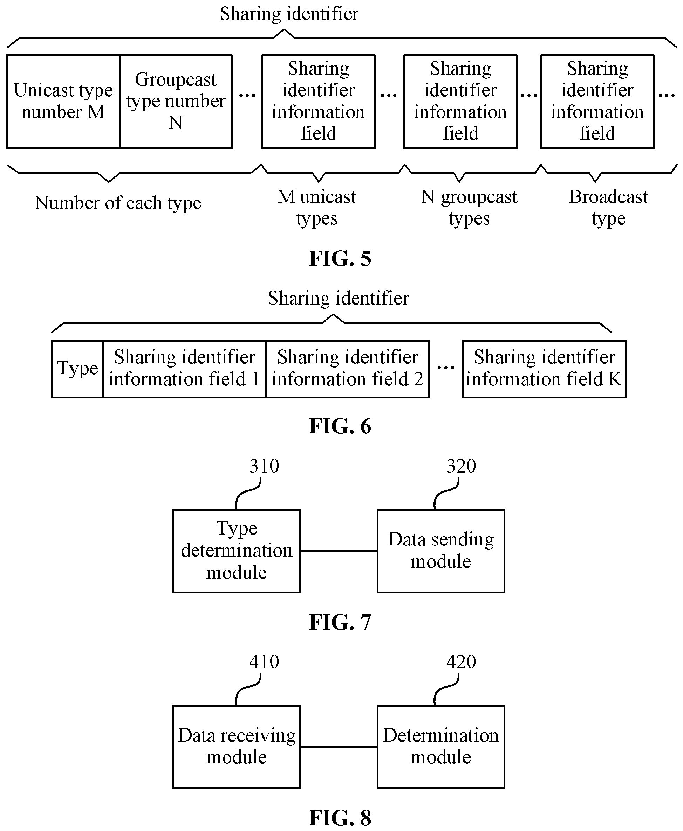

The sharing identifier contained in the sharing information in one transmission is used for identifying one or more UEs that the current COT may be shared with. FIG. 5 is a schematic diagram of another sharing identifier according to an embodiment. As shown in FIG. 5, the sharing identifier contains at least one sharing identifier information field. The sharing identifier information fields of each type correspond to one piece of sharing indication information for indicating the number of the sharing identifier information fields of each type, that is, the sharing identifier information fields of each type correspond to a number field. With the above three identifier types as an example, the unicast-type number field indicates the number of sharing identifier information fields of the unicast identifier type, the groupcast-type number field indicates the number of sharing identifier information fields of the groupcast identifier type, and the broadcast-type number field indicates the number of sharing identifier information fields of the broadcast identifier type. In an embodiment, for X identifier types, only X - 1 number fields corresponding to X - 1 identifier types need to be indicated, and the number of sharing identifier information fields of the remaining identifier type may be calculated according to the total number of sharing identifier information fields contained in the sharing identifier and the number of sharing identifier information fields of the above X - 1 identifier types or according to the total number of bits occupied by all sharing identifier information fields and the number of bits occupied by the sharing identifier information fields of the above X - 1 identifier types. That is, the number of sharing identifier information fields of the remaining identifier type is implicitly indicated by a hidden number field, which is functionally equivalent to explicitly indicating a number by using a number field. Consequently, without distinguishing between the explicit indication and the implicit indication, the number field is generally described to indicate the number of corresponding sharing identifier information fields. With four identifier types as an example, only three number fields need to be indicated to indicate the number of sharing identifier information fields of the unicast type, the number of sharing identifier information fields of the groupcast type 1, and the number of sharing identifier information fields of groupcast type 2, and the number of sharing identifier information fields of the broadcast type may be derived through calculation.

Similarly, FIG. 5 is a schematic diagram for illustration, and the actual locations of the number fields and the sharing identifier information fields are not limited. For example, in FIG. 5, the number fields and the associated sharing identifier information fields are arranged in a locational one-to-one correspondence. Alternatively, the number field and the associated sharing identifier information field may be adjacent to each other to achieve the correspondence relationship, and the details are not repeated here.

Similarly, the sharing configuration information in Embodiment one is also applicable in this embodiment. For example, if only one identifier type is allowed, the above number field may be omitted.

### Embodiment three

In this embodiment, the sharing identifier contains at least one sharing identifier information field, and the sharing identifier may carry sharing identifier information fields of only one identifier type. FIG. 6 is a schematic diagram of another sharing identifier according to an embodiment. As shown in FIG. 6, the type field indicates the types of K sharing identifier information fields, that is, one type field indicates the types of all sharing identifier information fields.

With two identifier types as an example, the type field indicates whether the sharing identifier information field is of a unicast identifier type or a groupcast/broadcast identifier type. The cases involving three and four identifier types are not described in detail here. In an instance, the sharing identifier may further include a number field for indicating the number of sharing identifier information fields.

Similarly, the sharing configuration information in Embodiment one is also applicable in this embodiment. For example, if it is configured that only one identifier type is allowed, the above type field and/or the number field may be omitted.

### Embodiment four

In this embodiment, the related information includes sharing configuration information which is similar to the sharing indication information described in the preceding embodiments.

Similar to Embodiment one, the sharing identifier contains at least one sharing identifier information field, and each sharing identifier information field corresponds to one piece of sharing configuration information for configuring the type of the each sharing identifier information field. With three identifier types as an example, the sharing configuration information indicates whether the corresponding sharing identifier information field is of a unicast identifier type, a groupcast identifier type or a broadcast identifier type. In this manner, the type field does not need to be dynamically indicated, thereby reducing indication overhead. However, this approach is less flexible compared to the dynamic indication.

Similar to Embodiment two, the sharing identifier contains at least one sharing identifier information field, and the sharing configuration information is employed to configure the number of sharing identifier information fields of each type. In an instance, the location of the sharing identifier information fields of each type, such as the starting location, is also configured. In this manner, the number field does not need to be dynamically indicated, thereby reducing indication overhead. However, this approach is less flexible compared to the dynamic indication.

Similar to Embodiment three, if only one identifier type is configured or allowed, the above type field may be omitted. Similarly, in an instance, a number may further be configured to indicate the number of sharing identifier information fields.

### Embodiment five

Generally, one transmission further contains the transmission identifier corresponding to the transmission, including a Source ID and a Destination ID, for identifying the receiver of the transmission. The receiver of COT sharing information may be different from the receiver of the transmission. The cast type of the transmission may be unicast, groupcast or broadcast. In an instance, the groupcast type may be divided into multiple types such as a groupcast type 1, a groupcast type 2, and the like. Although the cast type and the transmission identifier are functionally equivalent to one type field and corresponding sharing identifier information fields to indicate shareable UEs, for one transmission, only one Source ID and one Destination ID are allowed to be carried, and only one cast type is allowed. Assuming that the receiver of COT sharing information must coincide with the receiver of the transmission and is not enhanced, the IUE can only share the COT with fewer UEs, thereby resulting in low COT usage efficiency. Therefore, by using the sharing identifier, the COT can be shared with more UEs.

In an instance, the sharing identifier contains at least one sharing identifier information field. The type of the at least one sharing identifier information field is determined based on the cast type of the transmission indicated in the sharing information. For example, if the cast type is unicast, all the sharing identifier information fields are of a unicast identifier type; if the cast types are groupcast, the groupcast type 1, and the groupcast type 2, all the sharing identifier information fields are of a groupcast identifier type; if the cast type is broadcast, all the sharing identifier information fields are of a broadcast identifier type; if the cast types are broadcast, groupcast, the groupcast type 1, and the groupcast type 2, all the sharing identifier information fields are of a broadcast/groupcast identifier type; if the cast types are the groupcast type 1 and the groupcast type 2, the sharing identifier information fields are of a groupcast type 1 and a groupcast type 2. In another instance, if the cast type is unicast, all the sharing identifier information fields are of a broadcast identifier type or a groupcast identifier type; if the cast type is groupcast or broadcast, all the sharing identifier information fields are of a unicast identifier type.

### Embodiment six

The sharing indication information and the sharing identifier information field may be carried in an information element such as SCI of a physical-layer channel signal, a higher-layer MAC CE and/or a MAC header, may be carried partially in SCI and partially in a higher-layer element, or may be carried in any combination of the above manners, which is not limited here. Several combinations are listed below, but the embodiments of the present application are not limited to these combinations.

The sharing indication information may be carried in the SCI of a PSCCH, and the sharing identifier information field may be carried in the SCI of a PSSCH. The sharing indication information and the sharing identifier information field may be carried in the SCI of the PSSCH. The sharing indication information may be carried in the SCI, and the sharing identifier information field may be carried in the higher-layer information element. The sharing indication information and/or part of the sharing identifier information field may be carried in the SCI, and the remainder of the sharing identifier information field may be carried in the higher-layer information element. For example, for unicast, the Source ID is carried in the SCI, and the Destination ID is carried in the MAC CE; or part of the Source ID is carried in the SCI, and the Destination ID and the remainder of the Source ID are carried in the MAC CE. Scenarios in groupcast and broadcast are similar to the above scenarios in unicast.

In an instance, the indication information may be carried in the transmission to indicate whether the sharing indication information and/or the sharing identifier information field are included in the transmission. The above indication information may be considered as a type of sharing indication information. For example, the indication information may be carried in the first portion of the transmission to indicate whether the sharing indication information and/or the sharing identifier information field in Embodiments one to five are included in the second portion of the transmission. This design allows the receiving UE to determine in advance whether the transmission contains the sharing identifier, thereby avoiding decoding the entire transmission and reducing power consumption and processing overhead. For example, the indication information is carried in the first SCI of the PSCCH to indicate whether the sharing indication information and/or the sharing identifier information field are included in the second SCI of the PSCCH; or the indication information is carried in the SCI to indicate whether the sharing indication information and/or the sharing identifier information field are included in the higher-layer information element.

### Embodiment seven

This embodiment mainly focuses on the second node, that is, a UE receiving the sharing information. One UE receives the COT sharing information, and the UE is considered as a responding UE shared with the current COT if the UE meets at least one of the following conditions.

If a sharing identifier information field is determined to be of a unicast identifier type, the destination identifier of a unicast connection of the UE corresponds to the source identifier indicated in the sharing identifier information field. Optionally, the above condition further includes: the source identifier of the unicast connection of the UE corresponds to the destination identifier indicated in the sharing identifier information field. If a sharing identifier information field is determined to be of a groupcast identifier type, a groupcast destination identifier of the UE corresponds to the groupcast destination identifier indicated in the sharing identifier information field. If a sharing identifier information field is determined to be of a broadcast identifier type, a broadcast destination identifier of the UE corresponds to the broadcast destination identifier indicated in the sharing identifier information field.

The above conditions are described with three identifier types as an example, and the actual conditions may be extended to include other situations. The conditions are further extended to include the following.

If a sharing identifier information field is determined to be of a groupcast identifier type or a broadcast identifier type, a groupcast destination identifier or a broadcast destination identifier of the UE corresponds to the groupcast destination identifier or the broadcast destination identifier indicated in the sharing identifier information field, that is, the UE recognizes the groupcast destination identifier or the broadcast destination identifier. If a sharing identifier information field is determined to be of a groupcast identifier type 1, a destination identifier of a groupcast type 1 of the UE corresponds to the identifier of the groupcast type 1 indicated in the sharing identifier information field. If a sharing identifier information field is determined to be of a groupcast identifier type 2, a destination identifier of a groupcast type 2 of the UE corresponds to the identifier of the groupcast type 2 indicated in the sharing identifier information field.

In addition to determining whether the UE can share the COT according to the sharing identifier, the UE may also determine whether the UE itself can share the COT according to the cast type of the transmission and the transmission identifier. The conditions may be further extended to include the following.

If the cast type of the transmission is unicast, a destination identifier of a unicast connection of the UE corresponds to the source identifier in the transmission identifier of the transmission. Optionally, the above condition further includes: the source identifier of the unicast connection of the UE corresponds to the destination identifier in the transmission identifier. If the cast type of the transmission is groupcast, a groupcast destination identifier of the UE corresponds to the groupcast destination identifier in the transmission identifier of the transmission. If the cast type of the data is broadcast, a broadcast destination identifier of the UE corresponds to the broadcast destination identifier in the transmission identifier of the transmission. If the cast type of the data is groupcast or broadcast, a groupcast destination identifier or a broadcast destination identifier of the UE corresponds to the groupcast destination identifier or the broadcast destination identifier in the transmission identifier of the transmission. If the cast type of the transmission is a groupcast type 1, a destination identifier of the groupcast type 1 of the UE corresponds to the groupcast destination identifier in the transmission identifier of the transmission. If the cast type of the transmission is a groupcast type 2, a destination identifier of the groupcast type 2 of the UE corresponds to the groupcast destination identifier in the transmission identifier of the transmission.

In an instance, for unicast, if whether a UE may become an RUE is identified according to the cast type and the transmission identifier, the destination identifier of a unicast connection of the UE needs to correspond to the source identifier in the transmission identifier of the transmission, and the source identifier of the unicast connection of the UE needs to correspond to the destination identifier indicated in the transmission identifier. If whether a UE may become an RUE is identified according to the sharing identifier information field, only the destination identifier of a unicast connection of the UE needs to correspond to the source identifier indicated in the sharing identifier information field.

### Embodiment eight

The preceding embodiments require the network side to configure the related information so that they may be implemented properly. For example, the network side needs to notify both the UE sending the COT sharing information and the UE receiving the sharing information of the signaling carrying the sharing configuration information to ensure the consistent understanding of the sharing identifier between the two UEs. Generally, one piece of configuration information may further include a resource scope to which the configuration information is applicable. For example, the configuration information may be configured for each resource pool or for each bandwidth part (BWP).

In an instance, a communication node includes a first node and a second node (such as an IUE and an RUE, respectively). The communication node may further send the information involved in the preceding embodiments, such as the sharing identifier or the sharing information, to the network side, and then assist in resource scheduling at the network side.

In an instance, the network side may send the information involved in the preceding embodiments, such as the sharing identifier or the sharing information, to the UE (for example, the IUE) to enable the network side to have control over which UEs the IUE shares the COT with. For example, the network side may also send the information involved in the preceding embodiments to the RUE to enable the RUE to recognize the sharing identifier.

In an instance, the sharing identifier information field may also be a network identifier type, that is, an identifier of a corresponding network side. If the network to which the receiving UE belongs corresponds to the indicated network identifier, the UE may become an RUE. For example, the network side identifier may be a higher-layer information element ID, a physical cell identifier (PCI) or a synchronization identifier.

An embodiment of the present application further provides a data transmission apparatus. FIG. 7 is a structural diagram of a data transmission apparatus according to an embodiment. As shown in FIG. 7, the data transmission apparatus includes a type determination module 310 and a data sending module 320.

The type determination module 310 is configured to determine the type of at least one sharing identifier information field according to related information. The data sending module 320 is configured to send data containing COT sharing information, where the sharing information contains the at least one sharing identifier information field, and the at least one sharing identifier information field is used for indicating one or more second nodes sharing a COT.

In the data transmission apparatus of this embodiment, a first node can not only send data within the COT but also share the COT with the second node. In this embodiment, the data sent by the first node to the second node contains sharing information, and the second node receives the sharing information. If the second node meets a certain condition, the second node may share the COT with the first node, thereby achieving COT sharing. The process of sending the sharing information supports a variety of cast types such as unicast, groupcast and broadcast. The IUE can identify which UEs may become RUEs, and the IUE can restrict the content the RUEs send. Considering the sending format of sharing information, associated overhead, and the complexity of reception of sharing information at the second node, OCT sharing is effectively and reliably controlled on the above basis.

In an embodiment, the type includes at least one of: a unicast identifier type, a groupcast identifier type or a broadcast identifier type.

In an embodiment, the related information includes sharing configuration information and/or sharing indication information.

In an embodiment, the related information includes sharing indication information; each sharing identifier information field corresponds to a type field in the sharing indication information or the at least one sharing identifier information field corresponds to a type field in the sharing indication information.

In an embodiment, if the sharing identifier information field is of a unicast identifier type, the corresponding sharing identifier information field at least includes a source identifier; if the sharing identifier information field is of a groupcast identifier type or a broadcast identifier type, the corresponding sharing identifier information field at least includes a destination identifier.

In an embodiment, sharing identifier information fields of each type correspond to a number field in sharing indication information, where the number field is used for indicating the number of the sharing identifier information fields of each type; or the at least one sharing identifier information field corresponds to a number field in sharing indication information, where the number field is used for indicating the number of the at least one sharing identifier information field.

In an embodiment, the related information includes sharing configuration information; each sharing identifier information field corresponds to one piece of sharing configuration information for configuring the type of the each sharing identifier information field; or the at least one sharing identifier information field corresponds to one piece of sharing configuration information for configuring the type of the at least one sharing identifier information field.

In an embodiment, the related information includes sharing configuration information; the sharing configuration information is used for configuring the number of sharing identifier information fields of each type or the sharing configuration information is used for configuring the number of the at least one sharing identifier information field.

In an embodiment, the related information includes sharing configuration information, and the sharing configuration information is used for configuring configuration information for determining whether to allow the at least one sharing identifier information field to be sent.

In an embodiment, the data further contains a transmission identifier, and the transmission identifier includes a source identifier and a destination identifier.

In an embodiment, the type of the at least one sharing identifier information field is determined according to the cast type of the data and the transmission identifier.

In an embodiment, the related information and the at least one sharing identifier information field are carried in at least one of the following information elements: SCI, a MAC CE or a MAC header.

The data transmission apparatus provided in this embodiment and the data transmission method provided in the preceding embodiments belong to the same inventive concept. For technical details not described in detail in this embodiment, reference may be made to any one of the preceding embodiments, and this embodiment has the same effects as the data transmission method performed.

An embodiment of the present application further provides a data transmission apparatus. FIG. 8 is a structural diagram of another data transmission apparatus according to an embodiment. As shown in FIG. 8, the data transmission apparatus includes a data receiving module 410 and a determination module 420.

The data receiving module 410 is configured to receive data containing COT sharing information, where at least one sharing identifier information field is provided in the sharing information, and the at least one sharing identifier information field is used for indicating one or more second nodes sharing a COT. The determination module 420 is configured to determine the type of the at least one sharing identifier information field.

In the data transmission apparatus of this embodiment, a first node can not only send data within the COT but also share the COT with the second node. In this embodiment, the data sent by the first node to the second node contains sharing information, and the second node receives the sharing information. If the second node meets a certain condition, the second node may share the COT with the first node, thereby achieving COT sharing. The process of sending the sharing information supports a variety of cast types such as unicast, groupcast and broadcast. The IUE can identify which UEs may become RUEs, and the IUE can restrict what the RUEs send. Considering the sending format of sharing information, associated overhead, and the complexity of reception of sharing information at the second node, OCT sharing is effectively and reliably controlled on the above basis.

In an embodiment, the apparatus further includes a first node determination module, which is configured to determine whether the second node is a responding node according to the cast type. The second node is a responding node if the second node meets at least one of the following conditions.

A sharing identifier information field is determined to be of a unicast identifier type, and the destination identifier of a unicast connection of the second node corresponds to the source identifier indicated in the sharing identifier information field; a sharing identifier information field is determined to be of a unicast identifier type, the destination identifier of a unicast connection of the second node corresponds to the source identifier indicated in the sharing identifier information field, and the source identifier of the unicast connection of the second node corresponds to the destination identifier indicated in the sharing identifier information field; a sharing identifier information field is determined to be of a groupcast identifier type, and a groupcast destination identifier of the second node corresponds to the groupcast destination identifier indicated in the sharing identifier information field; or a sharing identifier information field is determined to be of a broadcast identifier type, and a broadcast destination identifier of the second node corresponds to the broadcast destination identifier indicated in the sharing identifier information field.

In an embodiment, the second node further meets at least one of the following conditions.

The priority of data sent by the second node is higher than or equal to the priority of data of a node initiating the COT; the priority of data sent by the second node is higher than or equal to the priority indicated by the node initiating the COT; the received power detected by the second node and corresponding to the sharing information is greater than or equal to a set threshold value; or the duration of data sent by the second node does not exceed the remaining COT duration.

In an embodiment, the second node further meets at least one of the following conditions.

A sharing identifier information field is determined to be of a groupcast identifier type or a broadcast identifier type, and a groupcast destination identifier or a broadcast destination identifier of the second node corresponds to the groupcast destination identifier or the broadcast destination identifier indicated in the sharing identifier information field; or a sharing identifier information field is determined to be of a groupcast identifier type N, and a destination identifier of a groupcast type 1 of the second node corresponds to the identifier of a groupcast type N indicated in the sharing identifier information field, where N is a positive integer.

In an embodiment, the apparatus further includes a second node determination module, which is configured to determine whether the second node is a responding node according to the cast type of the data and the transmission identifier. The second node is a responding node if the second node meets at least one of the following conditions.

The cast type of the data is unicast, and the destination identifier of a unicast connection of the second node corresponds to the source identifier in the transmission identifier of the transmission; the cast type of the data is unicast, the destination identifier of a unicast connection of the second node corresponds to the source identifier in the transmission identifier of the transmission, and the source identifier of the unicast connection of the second node corresponds to the destination identifier in the transmission identifier; the cast type of the data is groupcast, and a groupcast destination identifier of the second node corresponds to the groupcast destination identifier in the transmission identifier of the transmission; the cast type of the data is broadcast, and a broadcast destination identifier of the second node corresponds to the broadcast destination identifier in the transmission identifier of the transmission; the cast type of the data is groupcast or broadcast, and a groupcast destination identifier or a broadcast destination identifier of the second node corresponds to the groupcast destination identifier or the broadcast destination identifier in the transmission identifier of the transmission; or the cast type of the data is a groupcast type N, and a destination identifier of the groupcast type N of the second node corresponds to the groupcast destination identifier in the transmission identifier of the transmission, where N is a positive integer.

The data transmission apparatus provided in this embodiment and the data transmission method provided in the preceding embodiments belong to the same inventive concept. For technical details not described in detail in this embodiment, reference may be made to any one of the preceding embodiments, and this embodiment has the same effects as the data transmission method performed.

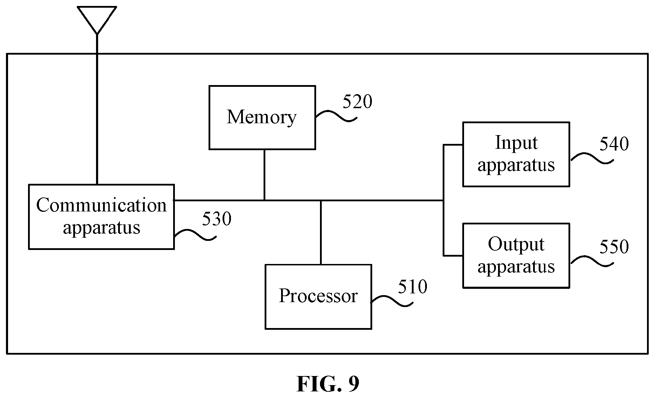

An embodiment of the present application further provides a communication node. FIG. 9 is a structural diagram of the hardware of a communication node according to an embodiment. As shown in FIG. 9, the communication node provided by the present application includes a processor 510 and a memory 520. One or more processors 510 may be provided in the communication node, and one processor 510 is illustrated as an example in FIG. 9. The memory 520 is configured to store one or more programs. The one or more programs are executed by the one or more processors 510 to cause the one or more processors 510 to perform the data transmission method in the embodiments of the present application.

The communication node further includes a communication apparatus 530, an input apparatus 540, and an output apparatus 550.

The processor 510, the memory 520, the communication apparatus 530, the input apparatus 540, and the output apparatus 550 in the communication node may be connected via a bus or in other manners, and the connection via a bus is illustrated as an example in FIG. 9.

The input apparatus 540 may be configured to receive input digital or character information and generate key signal input related to user settings and function control of the communication node. The output apparatus 550 may include a display device such as a display screen.

The communication apparatus 530 may include a receiver and a sender. The communication apparatus 530 is configured to perform information transceiving and communication under the control of the processor 510.

As a computer-readable storage medium, the storage apparatus 520 may be configured to store software programs, computer-executable programs and modules, such as program instructions/modules (for example, the type determination module 310 and the data sending module 320 in the data transmission apparatus) corresponding to the data transmission method in the embodiments of the present application. The memory 520 may include a program storage region and a data storage region. The program storage region may store an operating system and an application program required by at least one function. The data storage region may store data created according to the use of the communication node. Additionally, the memory 520 may include a high-speed random-access memory and may also include a nonvolatile memory such as at least one magnetic disk memory, a flash memory, or another nonvolatile solid-state memory. In some examples, the memory 520 may further include memories remotely disposed relative to the processor 510. These remote memories may be connected to the communication node via a network. Examples of the preceding network include, but are not limited to, the Internet, an intranet, a local area network, a mobile communication network, and a combination thereof.

An embodiment of the present application further provides a storage medium. The storage medium stores a computer program which, when executed by a processor, causes the processor to perform the data transmission method in any one of the embodiments of the present application. The method includes: the type of at least one sharing identifier information field is determined according to related information, and data containing COT sharing information is sent, where the sharing information contains the at least one sharing identifier information field, and the at least one sharing identifier information field is used for indicating one or more second nodes sharing a COT.

A computer storage medium of an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared or semiconductor system, apparatus or device or any combination thereof. Examples of the computer-readable storage medium include (a non-exhaustive list of) an electrical connection having one or more wires, a portable computer disk, a hard disk, a random-access memory (RAM), a read-only memory (ROM), an electrically erasable programmable read-only memory (EPROM), a flash memory, an optical fiber, a portable compact disc read-only memory (CD-ROM), an optical memory, a magnetic memory, or any appropriate combination thereof. The computer-readable storage medium may be any tangible medium including or storing a program. The program may be used by or used in conjunction with an instruction execution system, apparatus, or device.

The computer-readable signal storage medium may include a propagated data signal with computer-readable program codes embodied therein, for example, in a baseband or as a part of a carrier wave. The data signal propagated in this manner may be in multiple forms, including, but not limited to, an electromagnetic signal, an optical signal, or any appropriate combination thereof. The computer-readable signal medium may also be any computer-readable medium other than the computer-readable storage medium. The computer-readable medium may send, propagate, or transmit a program used by or used in conjunction with an instruction execution system, apparatus, or device.

The program codes included on the computer-readable medium may be transmitted by using any appropriate medium including, but not limited to, a wireless medium, a wire, an optical cable, a radio frequency (RF), or any appropriate combination thereof.

Computer program codes for executing the operations of the present disclosure may be written in one or more programming languages or a combination of multiple programming languages. The programming languages include object-oriented programming languages (such as Java, Smalltalk, and C++) and conventional procedural programming languages (such as "C" or similar programming languages). The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer via any type of network (including a local area network (LAN) or a wide area network (WAN)) or may be connected to an external computer (for example, via the Internet provided by an Internet service provider).

The preceding are example embodiments of the present application and are not intended to limit the scope of the present application.

It is to be understood by those skilled in the art that the term "user equipment" encompasses any appropriate type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM) and an optical memory device and system (a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA) and a processor based on a multi-core processor architecture.

## Claims

1. A data transmission method, applied to a first node and comprising:
determining a type of at least one sharing identifier information field according to related information; and
sending data containing channel occupancy time (COT) sharing information, wherein the COT sharing information contains the at least one sharing identifier information field, and the at least one sharing identifier information field is used for indicating at least one second node sharing a COT.

2. The method of claim 1, wherein the type comprises at least one of:
a unicast identifier type, a groupcast identifier type or a broadcast identifier type.

3. The method of claim 1, wherein the related information comprises at least one of sharing configuration information or sharing indication information.

4. The method of claim 1, wherein the related information comprises sharing indication information;
each of the at least one sharing identifier information field corresponds to a type field in the sharing indication information; or
the at least one sharing identifier information field corresponds to a type field in the sharing indication information.

5. The method of claim 2, wherein
in response to a sharing identifier information field of the at least one sharing identifier information field being of a unicast identifier type, the sharing identifier information field at least comprises a source identifier; and
in response to a sharing identifier information field of the at least one sharing identifier information field being of a groupcast identifier type or a broadcast identifier type, the sharing identifier information field at least comprises a destination identifier.

6. The method of claim 2, wherein
in response to a sharing identifier information field of the at least one sharing identifier information field being of a unicast identifier type, the sharing identifier information field comprises a source identifier and a destination identifier; and
in response to a sharing identifier information field of the at least one sharing identifier information field being of a groupcast identifier type or a broadcast identifier type, the sharing identifier information field comprises reserved bits and a destination identifier.

7. The method of claim 1, wherein
sharing identifier information fields of each type correspond to a number field in sharing indication information, wherein the number field is used for indicating a number of the sharing identifier information fields of each type; or
the at least one sharing identifier information field corresponds to a number field in sharing indication information, wherein the number field is used for indicating a number of the at least one sharing identifier information field.

8. The method of claim 1, wherein the related information comprises sharing configuration information;
each of the at least one sharing identifier information field corresponds to one piece of sharing configuration information for configuring a type of the each of the at least one sharing identifier information field; or
the at least one sharing identifier information field corresponds to one piece of sharing configuration information for configuring the type of the at least one sharing identifier information field.

9. The method of claim 1, wherein the related information comprises sharing configuration information;
the sharing configuration information is used for configuring a number of sharing identifier information fields of each type; or
the sharing configuration information is used for configuring a number of the at least one sharing identifier information field.

10. The method of claim 1, wherein the related information comprises sharing configuration information, and the sharing configuration information is used for configuring configuration information for determining whether to allow the at least one sharing identifier information field to be sent.

11. The method of claim 1, wherein the data further contains a transmission identifier;
the transmission identifier comprises a source identifier and a destination identifier.

12. The method of claim 11, wherein the type of the at least one sharing identifier information field is determined according to a cast type of the data and the transmission identifier.

13. The method of claim 1, wherein the related information and the at least one sharing identifier information field are carried in at least one of the following information elements:
sidelink control information (SCI), a media access control-control element (MAC CE) or a media access control (MAC) header.

14. The method of claim 1, wherein
a first portion of the data carries indication information, and the indication information is used for indicating whether a second portion of the data contains the COT sharing information.

15. The method of claim 14, wherein
the first portion is first SCI in a physical sidelink control channel (PSCCH) of the data, and the second portion is second SCI in a physical sidelink shared channel (PSSCH) of the data.

16. A data transmission method, applied to a second node and comprising:
receiving data containing channel occupancy time (COT) sharing information, wherein at least one sharing identifier information field is provided in the COT sharing information, and the at least one sharing identifier information field is used for indicating at least one second node sharing a COT; and
determining a type of the at least one sharing identifier information field.

17. The method of claim 16, wherein whether a second node of the at least one second node is a responding node is determined according to the type;
wherein the second node is the responding node in response to the second node meeting at least one of the following conditions:
a sharing identifier information field is determined to be of a unicast identifier type, and a destination identifier of a unicast connection of the second node corresponds to a source identifier indicated in the sharing identifier information field;
a sharing identifier information field is determined to be of a unicast identifier type, a destination identifier of a unicast connection of the second node corresponds to a source identifier indicated in the sharing identifier information field, and a source identifier of the unicast connection of the second node corresponds to a destination identifier indicated in the sharing identifier information field;
a sharing identifier information field is determined to be of a groupcast identifier type, and a groupcast destination identifier of the second node corresponds to a groupcast destination identifier indicated in the sharing identifier information field; or
a sharing identifier information field is determined to be of a broadcast identifier type, and a broadcast destination identifier of the second node corresponds to a broadcast destination identifier indicated in the sharing identifier information field.

18. The method of claim 17, wherein the second node further meets at least one of the following conditions:
a priority of data sent by the second node is higher than or equal to a priority of data of a node initiating the COT;
a priority of data sent by the second node is higher than or equal to a priority indicated by a node initiating the COT;
received power detected by the second node and corresponding to the sharing information is greater than or equal to a set threshold value; or
a duration of data sent by the second node does not exceed a remaining COT duration.

19. The method of claim 17, wherein the second node further meets at least one of the following conditions:
a sharing identifier information field is determined to be of a groupcast identifier type or a broadcast identifier type, and a groupcast destination identifier or a broadcast destination identifier of the second node corresponds to a groupcast destination identifier or a broadcast destination identifier indicated in the sharing identifier information field; or
a sharing identifier information field is determined to be of a groupcast identifier type N, and a destination identifier of a groupcast type 1 of the second node corresponds to an identifier of a groupcast type N indicated in the sharing identifier information field, wherein N is a positive integer.

20. The method of claim 16, wherein whether a second node of the at least one second node is a responding node is determined according to a cast type of the data and a transmission identifier;
wherein the second node is the responding node in response to the second node meeting at least one of the following conditions:
the cast type of the data is unicast, and a destination identifier of a unicast connection of the second node corresponds to a source identifier in the transmission identifier;
the cast type of the data is unicast, a destination identifier of a unicast connection of the second node corresponds to a source identifier in the transmission identifier, and a source identifier of the unicast connection of the second node corresponds to a destination identifier in the transmission identifier;
the cast type of the data is groupcast, and a groupcast destination identifier of the second node corresponds to a groupcast destination identifier in the transmission identifier;
the cast type of the data is broadcast, and a broadcast destination identifier of the second node corresponds to a broadcast destination identifier in the transmission identifier;
the cast type of the data is groupcast or broadcast, and a groupcast destination identifier or a broadcast destination identifier of the second node corresponds to a groupcast destination identifier or a broadcast destination identifier in the transmission identifier; or
the cast type of the data is a groupcast type N, and a destination identifier of the groupcast type N of the second node corresponds to a groupcast destination identifier in the transmission identifier, wherein N is a positive integer.

21. A communication node, comprising a memory and at least one processor; wherein
the memory is configured to store at least one program; and
wherein the at least one program, when executed by the at least one processor, causes the at least one processor to perform the data transmission method of any one of claims 1 to 20.

22. A computer-readable storage medium storing a computer program which, when executed by a processor, causes the processor to perform the data transmission method of any one of claims 1 to 20.
